# EUROPEAN PATENT SPECIFICATION

(11) **EP 3 419 408 B1**
(45) Date of publication and mention of the grant of the patent: **29.01.2020**
(21) Application number: 16716053.0
(22) Date of filing: 25.02.2016
(51) Int. Cl.: A01G 13/02

(54) **PLASTIC FILM FOR COVERING LINEAR SOFT FRUIT CULTIVATIONS**
KUNSTSTOFFFOLIE ZUM ABDECKEN LINEARER WEICHOBSTKULTUREN
FILM PLASTIQUE POUR COUVRIR DES CULTURES LINÉAIRES DE FRUITS MOUS

(43) Date of publication of application: 02.01.2019
(73) Proprietor: Daios, Asterios, 59200 Naoussa (GR)
(72) Inventor: Daios, Asterios, 59200 Naoussa (GR)
(74) Representative: Argyriadis, Korinna
(86) International application number: PCT/GR2016/000007
(87) International publication number: WO 2017/144923

(56) References cited:
- WO-A1-03/067964
- DE-A1-102009 047 383
- GR-B- 1 002 871
- US-B1- 6 813 859

## Description

The invention refers to a plastic film for protecting linear soft fruit cultivations such as table grapes, raspberries, blueberries, blackberries, red currants, cherries etc.

Soft fruit cultivation is commonly performed in a linear fashion so that any cultivation work can be facilitated. Soft fruits are susceptible to weather conditions, especially when the are ripe enough for collection to start, and in particular to hail, rain, humidity and frost as well as the intense sun radiation that can cause skin burns to the fruit.

The present inventor as well as several inventors have proposed solutions for covering linear cultivations so that they can be protected from weather conditions. These solutions focus on using plastic films that cover the linear cultivations lengthways. The plastic films are usually produced employing materials such as polyolefins e.g. polyethylene, polypropylene, EVA, PVC or a blend thereof. The use of plastic films has been proven to provide a series of advantages such as protection of the crop from weather conditions, quality improvements, prolongation of the harvesting period and increase of the yields.

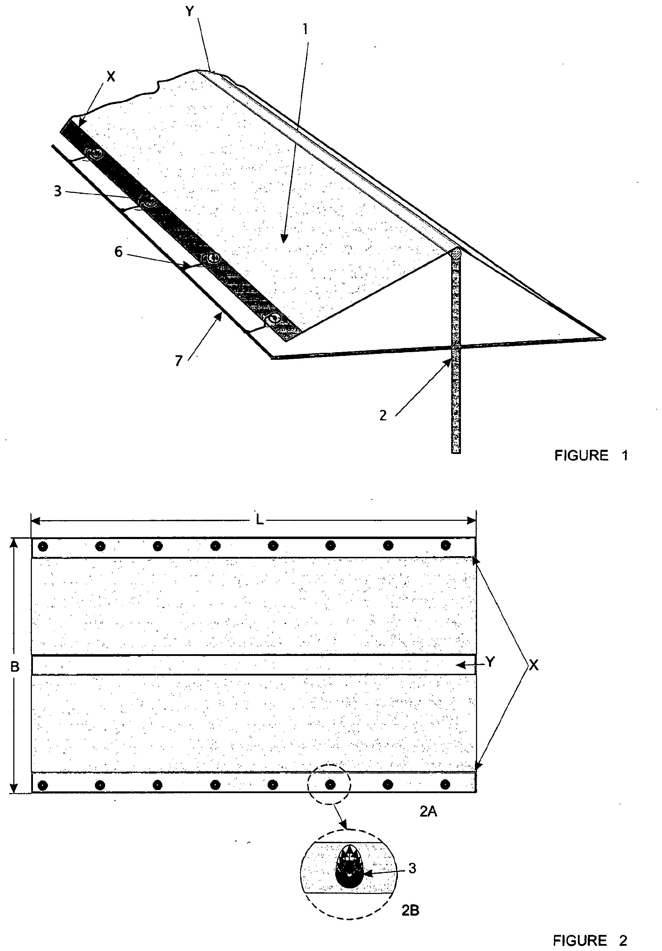

Putting these films in place on the cultivation lines is performed manually or by employing machines. For fixing the plastic films there is usually a supporting structure (Figure 1) that consists of uprights (metallic, wooden or cement) that are fixed in the ground with a local foundation or anchoring. The uprights are placed along the axis of the cultivation line at equal distances - commonly every 5m and they are also placed transversely in an array so that they form horizontal and perpendicular lines on the field. At a distance of 2/*3 of every upright that is* commonly above 2m height from the ground so that cultivation works can be readily facilitated - the uprights are bridged among them both in transverse and longitudinal directions with wire ropes that provide stability to the supporting structure and function in parallel as positions where the plastic films can be bound. Furthermore, the top sections of the uprights are bridged lengthways with wire ropes doubling as supports for the plastic film weight.

The plastic film is placed on the supporting structure and is bound on the wire ropes with ropes/strings or elastic straps or in other fashions such as the solutions that the present inventor proposed with the patents GR1002871 and GR1003863.

To fix the film in place holes are punched or cut on the film at the field along both sides lengthways as also described in patent US 6813859 B1, or there are predetermined metallic or plastic binding positions / eyelets at specified distances and commonly at a distance 25-100cm from one eyelet to the next. The sections of the film where holes are cut or punched or where predetermined eyelets are placed are reinforced in terms of material thickness so that the film exhibits enhanced mechanical properties.

The reinforcement lengthways at both sides of the film and its mid section (Figure 1 X and Y) is achieved by either producing the film with varying thickness across its width or by welding or sewing additional stripes of plastic film or weave along both sides as well as the mid section lengthways, or lastly by extruding or laminating the film at these predetermined sections. Other solutions involve incorporating a rope / string at both sides of the plastic films lengthways as for example described in patent ITBA20130077U1 or with welding a preform that incorporates the plastic cord / string that is welded or extruded along both sides of the plastic film so that the needed reinforcement is achieved.

It is of paramount importance to note here that during extrusion of the plastic film, the mechanical properties vary considerably between the longitudinal (machine) and transverse directions as the production process leads to better mechanical properties in the longitudinal direction. However, the forces exerted on the binding positions are concentrated locally around the holes and are gradually dissipated as we move towards the mid lengthways axis of the film.

Any of the aforementioned solutions exhibits disadvantages that the current invention resolves. Plastic films on which holes are cut or punched exhibit fast wearing, as the positions where the film is bound are not sufficiently reinforced so that they can withstand the loading especially in case of windy weather conditions. As a result, they get easily damaged and have a short life span. In the case of plastic films that are reinforced at the sides and bear metallic or plastic eyelets the localised force concentration is clearly more evenly distributed around the eyelets spreading the loading on both longitudinal and transverse directions however that only happens around the eyelets and not all along the film leading to a need for heavier/thicker films in order for the eyelets to withstand the loading.

Solutions that employ cords have the disadvantage that the cord (incorporated, welded or extruded) reinforces only the longitudinal direction hence the machine direction while the loading on the film is mainly applied in the transverse direction namely the direction that is weaker between the two. Consequently, such films are easily torn and damaged particularly at the position right after the cord and very near to it, as the transverse direction is not reinforced at all although it is the direction that bears the loading from the cords or elastic bands that bind the plastic film to the supporting structure.

Hence there is a need to produce a plastic film for covering linear soft fruit cultivations that will distribute the exerted loading from the ropes/cords or elastic straps that tie the plastic film to the supporting structure to both the longitudinal as well as the transverse directions in such a fashion so that the forces are distributed along the whole length of the plastic film providing more strength and the possibility to considerably reduce the thickness hence the cost of the plastic film alongside the life span of the product. Hence it leads to a considerable cost reduction for the soft fruit grower both in terms of acquiring the film, replacing it as well as a considerable ease of use as the reduced thickness allows for easier handling when installing and removing the film at the field at the beginning and the end of every season. This is achieved by incorporating in any manner a plastic cord along both longitudinal sides of the film that would allow the distribution of the loads in both longitudinal and transverse directions in other words that it will be either an inclined line in relation to the main lengthways axis or a waveform that could be for example described by the equation f(x) =α* sinx of any period and respective amplitude. This is achieved as the loading is distributed along the inclined line or waveform hence changing direction along it and as a result the force components are distributed in both directions all along both longitudinal sides.

Below the invention is described in the respective schematics:
- Figure 1:: A conventional plastic film (1) placed above the cultivation line. Depicted are the reinforced sections (X) and (Y), the eyelets (3), the ropes / strings / elastic bands (6), the supporting structure (2), the wire ropes (7) that bind the plastic film to the supporting structure
- Figures 2A and 2B:: Plastic film (1) with eyelets (3) (metallic or plastic), reinforced sections (X) and (Y) and a detail of the load distribution around an individual eyelet (2B).

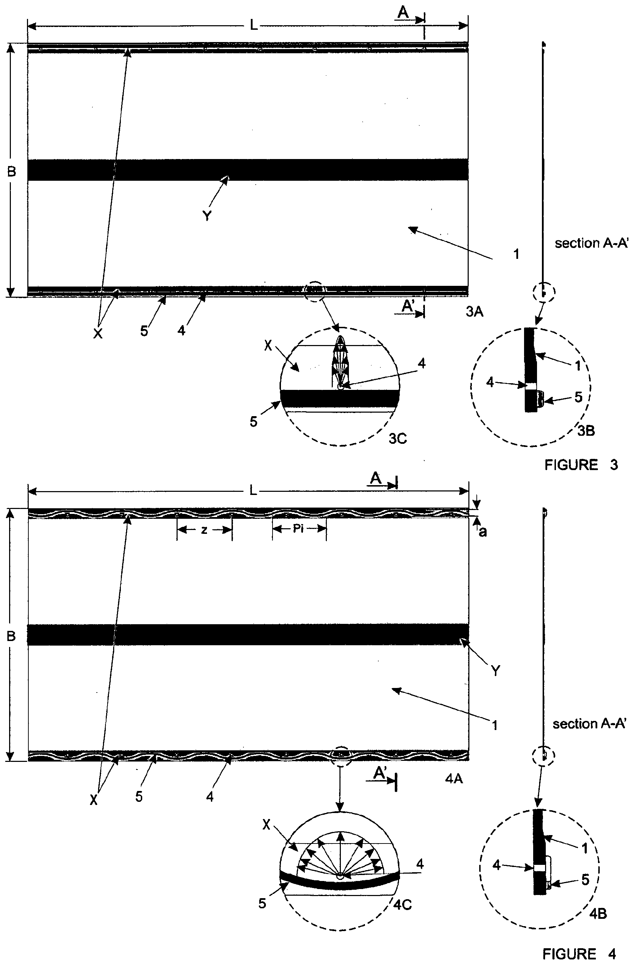

- Figures 3A, 3B and 3C:: Plastic film (1) with an incorporated cord (5), glued, welded, or extruded on the plastic film along both its lengthways sides, the reinforced sections (X), the cut or punched holes (4). And a detail of the load distribution close to the binding position. Depicted is also the cross section of the film (section A-A') (3B) showing the cross sectional geometry of the plastic cord. Figure 3C *depicts the load distribution at the* hole (4)
- Figures 4A, 4B and 4C:: Plastic film (1) with a waveform cord (5) that is glued, welded or extruded on the plastic film (1) along both its lengthways sides, reinforced sections (X), the holes (4) (4A) and a detail of the force distribution near the binding position (4B). Depicted is also the cross section of the film (section A-A') (4B). Figure (4C) depicts the wider load distribution of the waveform plastic cord

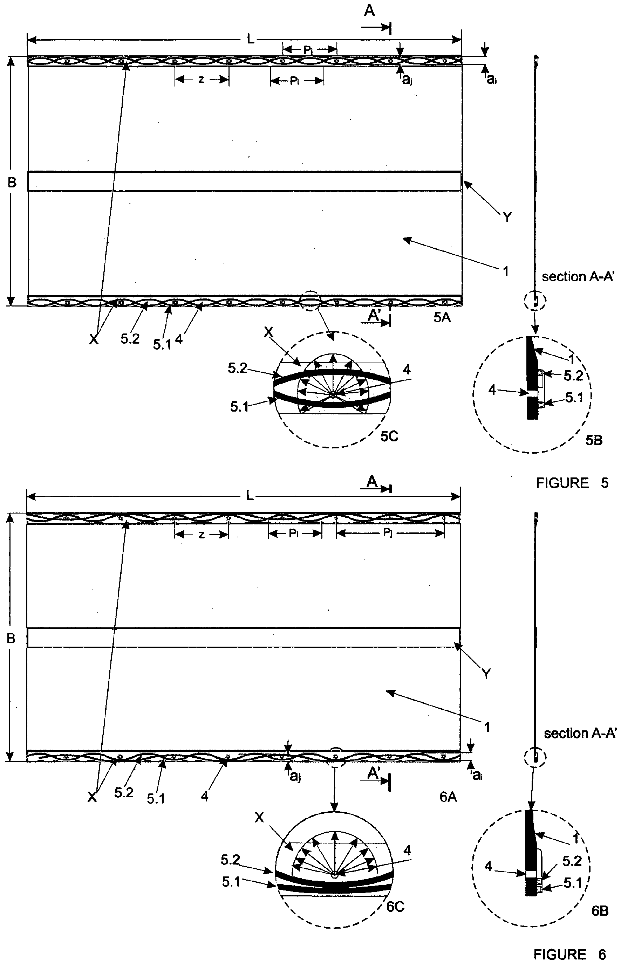

- Figure 5:: Plastic film (1) for covering linear soft fruit cultivations that bears two plastic waveform cords (5.1 and 5.2) on both its lengthways sides that have between them the same or different period and / or amplitude. Depicted are also the reinforced sections (X and Y) and the holes (4) as well as cross sections of the film (section A-A') (5B). Figure (5C) depicts the load distribution around antisymmetric waveform plastic cords.
- Figure 6:: Plastic film (1) for covering linear soft fruit cultivations that bears two waveform plastic cords (5.1 and 5.2) on both its lengthways sides that have between them different periods and/or different amplitudes. Depicted are also the reinforced sections (X and Y) and the holes (4) as well as cross section of the film (section A-A') with the load distribution.

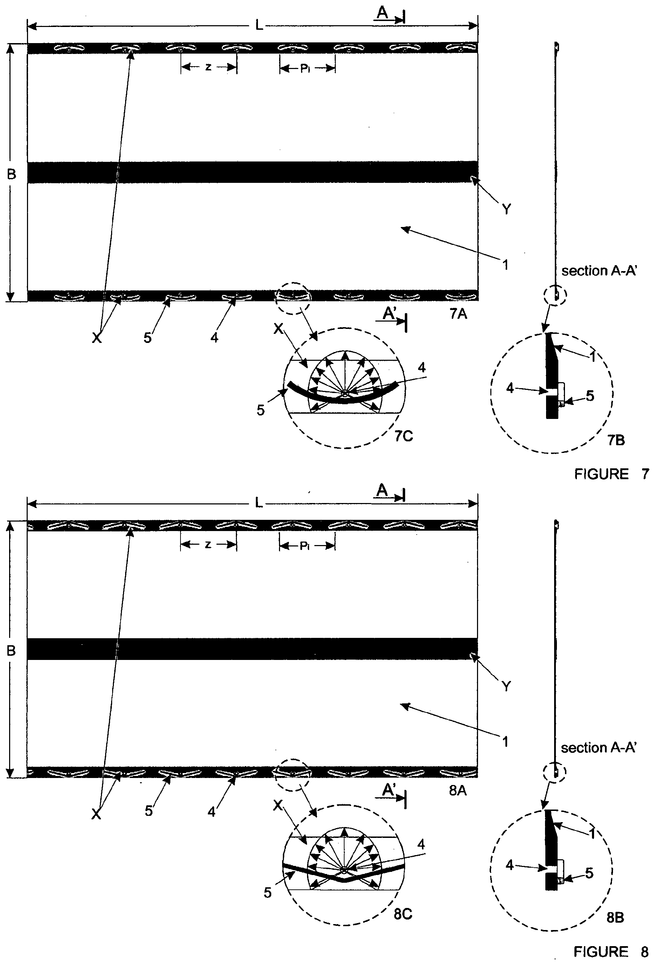

- Figure 7:: Plastic film (1) for covering linear soft fruit cultivations that bears plastic cord (5) or cords that have the form of a discontinuous waveform curve. Depicted are also the reinforced sections (X and Y) and the holes (4) as well as cross section of the film (section A-A') with the load distribution
- Figure 8:: Plastic film (1) for covering linear soft fruit cultivations that bears plastic cord (5) or cords that have the form of a discontinuous inclined linear line. Depicted are also the reinforced sections (X and Y) and the holes (4) as well as cross section of the film (section A-A') with the load distribution

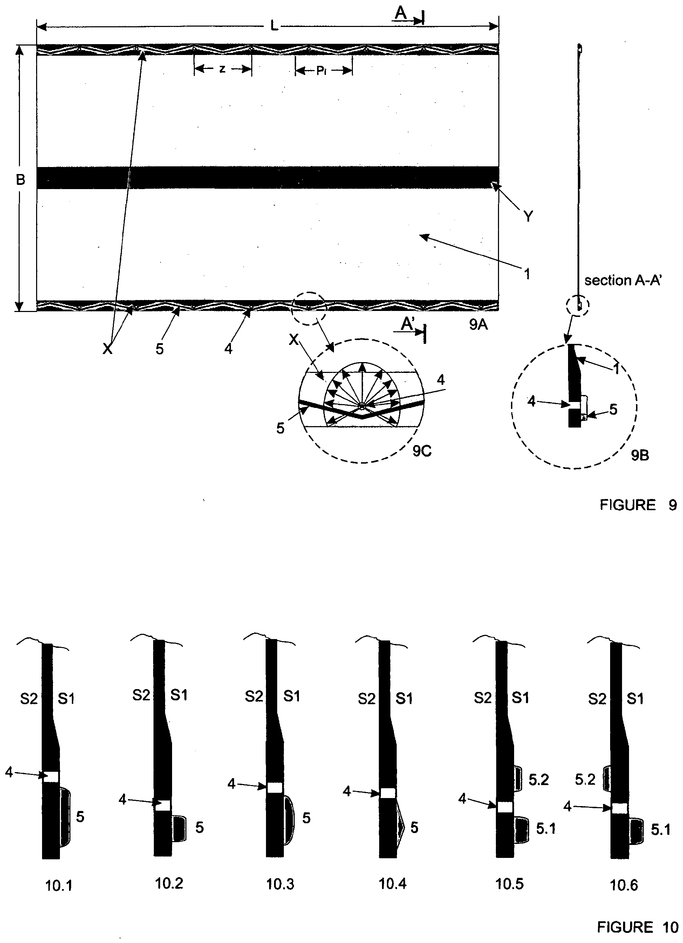

- Figure 9:: Plastic film (1) for covering linear soft fruit cultivations that bears a plastic cord that is inclined in relation to the main lengthways axis and follows a zig zag pattern. Depicted are also the reinforced sections (X and Y) and the holes (4) as well as cross section of the film (section A-A') with the load distribution
- Figure 10:: Depicts in cross sectional view one of the two longitudinal reinforced areas (X) that bears plastic cord (5) or cords (5.1 and 5.2) that can have a cross-sectional footprint of any shape and can be located on one (S1) (Figure 10.1 to 10.5) or both surfaces (S1 and S2) of the film (Figure 10.6).

According to the first embodiment of the invention (*Figure 4**) a plastic film* (1) is produced by employing a polyolefin such as LDPE, LLDPE, EVA etc. or a combination thereof. The plastic film can have any length (L) and width (B) that can be produced in any manner such as blown or cast film extrusion as monolayer or multilayer incorporating any additives so that it could exhibit any thermal, optical and mechanical properties. The plastic film that is produced in such a fashion so that it has varying thickness across its width and in particular thicker at a section (X) at both its lengthways edges as well as at a stripe (Y) along the mid longitudinal axis of the plastic film. Alternatively, the reinforced areas (X) and (Y) can be produced by either gluing, welding or sewing additional plastic film stripes or weaves of the same or different material or by folding the two edges and welding the two surfaces at the whole width (X) and additionally gluing, welding, sewing a stripe at the section (Y). Lastly the reinforcement could be achieved by directly extruding or laminating additional material on the plastic film at sections (X) and (Y). On both reinforced sections lengthways of the plastic film (X) a plastic cord is glued, welded or extruded employing the same material as the plastic film or different to it that is a waveform curve that has any period (Pᵢ) and amplitude (a) < (X) and preferably period 50cm and amplitude 15cm. Holes (4) are then cut or punched on the film at the troughs of the waveform curve having a diameter (D) and being placed very near to the plastic cord so that a rope or elastic band can be used to tie the film to the supporting structure. The period of the holes (z) can be the same as the period of the waveform curve or different and a multiple of it.

According to the second embodiment the invention (Figure 5) the plastic film is produced in such a fashion so that it has varying thickness across its width and in particular thicker at a section (X) at both its lengthways edges as well as at a stripe (Y) along the mid longitudinal axis of the plastic film. Altematively, the reinforced areas (X) and (Y) can be produced by either gluing, welding or sewing additional plastic film stripes or weaves of the same or different material or by folding the two edges and welding the two surfaces at the whole width (X) and additionally gluing, welding, sewing a stripe at the section (Y). Lastly the reinforcement could be achieved by directly extruding or laminating additional material on the plastic film at sections (X) and (Y). On both lengthways reinforced sides (X) several and preferably two plastic cords (5.1 and 5.2) are glued, welded or extruded on the film employing the same material as the plastic film or any material different to it, having the form of a waveform curve with periods (Pᵢ) and (Pⱼ) and amplitudes (aᵢ) and (aⱼ) and preferably the two plastic cords are antisymmetric that can be for example described by the equations f(x) = α*sinx and f(x) = -α*sinx respectively. Holes (4) are then cut or punched on the film at the troughs of the waveform curve having a diameter (D) and being placed very near to the troughs of the plastic cords so that a rope or elastic band can be used to tie the film to the supporting structure. The period of the holes (z) can be the same as the period of the waveform curves or different and a multiple of it.

According to the third embodiment of the invention the plastic film is produced in such a fashion so that it has varying thickness across its width and in particular thicker at a section (X) at both its lengthways edges as well as at a stripe (Y) along the mid longitudinal axis of the plastic film. Altematively, the reinforced areas (X) and (Y) can be produced by either gluing, welding or sewing additional plastic film stripes or weaves of the same or different material or by folding the two edges and welding the two surfaces at the whole width (X) and additionally gluing, welding, sewing a stripe at the section (Y). Lastly the reinforcement could be achieved by directly extruding or laminating additional material on the plastic film at sections (X) and (Y). The plastic cords could be glued, welded or extruded on both surfaces of the film. In addition, the plastic cords that are described by equations such as f(x) = α*sinx and f(x) = -α*sinx could be placed for example cord (5.1) on surface (S1) and cord (5.2) on surface (S2) or vice versa (Figure 10). Holes (4) are then cut or punched on the film at the troughs of the waveform curve having a diameter (D) and being placed very near to the troughs of the plastic cords so that a rope or elastic band can be used to tie the film to the supporting structure. The period of the holes (z) can be the same as the period of the waveform curves or different and a multiple of it.

According to the fourth embodiment of the invention the plastic film is produced in such a fashion so that it has varying thickness across its width and in particular thicker at a section (X) at both its lengthways edges as well as at a stripe (Y) along the mid longitudinal axis of the plastic film. Altematively, the reinforced areas (X) and (Y) can be produced by either gluing, welding or sewing additional plastic film stripes or weaves of the same or different material or by folding the two edges and welding the two surfaces at the whole width (X) and additionally gluing, welding, sewing a stripe at the section (Y). Lastly the reinforcement could be achieved by directly extruding or laminating additional material on the plastic film at sections (X) and (Y). The plastic cord or one of the plastic cords or all of the plastics cords could be glued, welded or extruded on one or one both surfaces of the film as modulated waveforms namely a combination of waveforms with periods (Pᵢ, Pⱼ, Pₖ...) and amplitudes (aᵢ, aⱼ, aₖ, ...). Holes (4) are then cut or punched on the film at the troughs of the waveform curve having a diameter (D) and being placed very near to the troughs of the plastic cords so that a rope or elastic band can be used to tie the film to the supporting structure. The period of the holes (z) can be the same as the period of the waveform curves or different and a multiple of it.

According to the fifth less preferable embodiment of the invention the plastic film is produced in such a fashion so that it has varying thickness across its width and in particular thicker at a section (X) at both its lengthways edges as well as at a stripe (Y) along the mid longitudinal axis of the plastic film. Altematively, the reinforced areas (X) and (Y) can be produced by either gluing, welding or sewing additional plastic film stripes or weaves of the same or different material or by folding the two edges and welding the two surfaces at the whole width (X) and additionally gluing, welding, sewing a stripe at the section (Y). Lastly the reinforcement could be achieved by directly extruding or laminating additional material on the plastic film at sections (X) and (Y). The plastic cord or plastic cords are comprised of several inclined linear lines of the same or different inclinations in relation to the main lengthways axis that follow instead of a waveform a zig zag pattern (Figure 9) that is either continuous or intermittent.

It is also important to note that in case there are several plastic cords on each lengthways sides they could have different periods (Pᵢ) and amplitudes (aᵢ) among them as well as along the lengthways side. They could for example in the case of having two cords on each side be described by different equations such as f(x) =α* sinx and f(x) = β*sin(x/2). Lastly there could be different periods and amplitudes among all plastic cords on the plastic film.

Furthermore, there could be discontinuous inclined lines in relation to the main lengthways axis or waveform plastic cords applied on the film namely applied on selected sections along the lengthways sides of the plastic film and not to its entire length (Figures 7 & 8)

The geometry of the cross-section of the plastic cord could be circular, semi circular, trapezoid, square, rectangular, elliptical as well as of variable geometry along the length of the film (Figure 10). In cases where there are more than one plastic cords they could be of different cross sectional geometry as well.

In addition, the material employed to produced the plastic cord could have additives such as glass fibres and / or elastomers so that it exhibits exceptional mechanical properties.

## Claims

1. Plastic film (1) for covering linear soft fruit cultivations that bears reinforced sections in terms of thickness (X) along its both edges as well as a reinforced section (Y) along its mid section lengthways said reinforcement produced by extruding the film with variable thickness across its width or by gluing, welding, sewing additional stripes of the same or different material or by directly extruding or laminating additional material on sections (X) and (Y) or by folding the lengthways edges and welding the fold on the plastic film at the whole section (X) and reinforcing section (Y) separately **characterised by** fact that a plastic cord (5) is glued, welded or extruded along both its lengthways sides being partially or entirely inclined in relation to the main lengthways axis with said inclination being constant or changing direction and following a repetitive pattern with period Pi and bearing holes (4) at both sections (X), adjacent to the inclined cord and at the positions that are closer to the edge however towards the side of the cord that is facing the main lengthways axis of the plastic film; said cord has a diameter (D) less than 10mm and due to said inclination of the cord distributes the exerted load at the whole reinforced area of the plastic film in both longitudinal and transverse directions, thus increasing the strength of the plastic film.

2. Plastic film (1) for covering linear soft fruit cultivations according to claim 1 that is **characterised by** the fact that the inclined cord has the form of a waveform curve with period (Pi) and amplitude (ai).

3. Plastic film (1) for covering linear soft fruit cultivations according to claim 1 and/or 2 that is **characterised by** the fact that on every lengthways edge the plastic films bears several plastic cords (5) that are glued, welded or extruded and are placed on the same surface or on both surfaces of the plastic film and are described by a symmetrical waveform curve f(x) = α*sinx κα f(x) = -α*sinx.

4. Plastic film (1) for covering linear soft fruit cultivations according to claim 1 and/or 2 or 3 that is **characterised by** the fact that on every lengthways edge the plastic films bears several plastic cords (5) that are glued, welded or extruded and are placed on the same surface or on both surfaces of the plastic film) and have different periods (Pi) and amplitudes (ai) among them.

5. Plastic film (1) for covering linear soft fruit cultivations according to claim 1 and/or 2 and/or 3 that is **characterised by** the fact that the cross section of the plastic cord (5) employed can be of any shape and/or of variable geometry along the length of the film.

6. Plastic film (1) for covering linear soft fruit cultivations according to claim 1 and/or 2, 3 and 4 that is **characterised by** the fact that the plastic cord (5) or cords are discontinuous as to the lengthways axis of the plastic film and exhibit a repetitive pattern.

7. Plastic film (1) for covering linear soft fruit cultivations according to claim 1 and/or claims 2, 3, 4 and 5 that is **characterised by** the fact that the plastic cord (5) or plastic cords (5) are inclined in relation to main lengthways axis of the plastic film and form a repetitive pattern with period Pi either having the same inclination or different inclinations intersecting each other or not thus forming a continuous or discontinuous zig zag form.

## Patentansprüche

1. Kunststofffolie (1) zum Abdecken linearer Weichobstkulturen, welche verstärkte Abschnitte aufweist in Bezug auf die Dicke (X) entlang ihrer beiden Kanten sowie einen verstärkten Abschnitt (Y) entlang ihres Mittelteils in Längsrichtung, welche Verstärkung hergestellt wird durch Extrudieren der Folie mit variabler Dicke über ihre Breite oder durch Kleben, Schweißen, Nähen zusätzlicher Streifen aus dem gleichen oder anderem Material oder durch direktes Extrudieren oder Laminieren zusätzlichen Materials auf die Abschnitte (X) und (Y) oder durch Falten der Längskanten und Schweißen der Falte auf die Kunststofffolie am ganzen Abschnitt (X) und getrennter Verstärkung des Abschnitts (Y) **dadurch gekennzeichnet dass** eine Kunststoffschnur (5) geklebt, geschweißt oder extrudiert wird entlang ihrer beiden Längsseiten welche teilweise oder vollständig geneigt ist in Bezug auf die Hauptlängsachse wobei die genannte Neigung konstant ist oder die Richtung ändert und einem sich wiederholenden Muster mit der Periode Pi folgt und Löcher (4) aufweist an beiden Abschnitten (X), neben der geneigten Schnur und an den Stellen, die näher an der Kante sind, jedoch in Richtung der Seite der Schnur, die der Hauptlängsachse der Kunststofffolie zugewandt ist, welche Schnur einen Durchmesser (D) kleiner als 10 mm hat und aufgrund der genannten Neigung der Schnur die ausgeübte Last auf die gesamte verstärkte Fläche der Kunststofffolie in Längs- und Querrichtung, dadurch die Festigkeit der Kunststofffolie erhöhend.

2. Kunststofffolie (1) zum Abdecken linearer Weichobstkulturen gemäß Anspruch 1, **dadurch gekennzeichnet, dass** die geneigte Schnur die Form einer Wellenformkurve hat mit der Periode (Pi) und der Amplitude (ai).

3. Kunststofffolie (1) zum Abdecken linearer Weichobstkulturen gemäß Anspruch 1 und/oder 2, **dadurch gekennzeichnet, dass** auf jeder Längskante die Kunststofffolie mehrere Kunststoffschnüre (5) trägt, die geklebt, geschweißt oder extrudiert sind und auf der gleichen Fläche oder auf beiden Flächen der Kunststofffolie angebracht und durch eine symmetrische Wellenformkurve f(x) = α*sinx und f(x) = -α*sinx beschrieben sind.

4. Kunststofffolie (1) zum Abdecken linearer Weichobstkulturen gemäß Anspruch 1 und/oder 2 oder 3, **dadurch gekennzeichnet, dass** auf jeder Längskante die Kunststofffolie mehrere Kunststoffschnüre (5) trägt, die geklebt, geschweißt oder extrudiert und auf der gleichen Fläche oder auf beiden Flächen der Kunststofffolie angebracht sind und untereinander verschiedene Perioden (Pi) und Amplituden (ai) haben.

5. Kunststofffolie (1) zum Abdecken linearer Weichobstkulturen gemäß Anspruch 1 und/oder 2 und/oder 3, **dadurch gekennzeichnet, dass** der Querschnitt der verwendeten Kunststoffschnur (5) von beliebiger Form und/oder variabler Geometrie sein kann entlang der Länge der Folie.

6. Kunststofffolie (1) zum Abdecken linearer Weichobstkulturen gemäß Anspruch 1 und/oder 2, 3 und 4, **dadurch gekennzeichnet, dass** die Kunststoffschnur (5) oder -Schnüre diskontinuierlich bezüglich der Längsachse der Kunststofffolie sind und ein sich wiederholendes Muster aufweisen.

7. Kunststofffolie (1) zum Abdecken linearer Weichobstkulturen gemäß Anspruch 1 und/oder Ansprüchen 2, 3, 4, und 5 **dadurch gekennzeichnet, dass** die Kunststoffschnur (5) oder Kunststoffschnüre (5) geneigt sind in Bezug auf die Hauptlängsachse der Kunststofffolie und ein sich wiederholendes Muster bilden, wobei die Periode Pi entweder die gleiche Neigung oder unterschiedliche Neigungen aufweist, die sich schneiden oder nicht wodurch eine kontinuierliche oder diskontinuierliche Zickzackform gebildet wird.

## Revendications

1. Film plastique (1) pour couvrir des cultures linéaires de fruits mous, qui a des sections renforcées en terme d'épaisseur (X) le long de ses deux bords ainsi qu'une section renforcée (Y) le long de sa section médiane dans le sens de la longueur, ledit renfort produit en extrudant le film d'épaisseur variable sur toute sa largeur ou par collage, soudage, couture de rayures supplémentaires dans un matériau identique ou different ou en extrudant directement ou laminage de materiel supplémentaire sur des sections (X) et (Y) ou en pliant les bords dans le sens de la longueur et en soudant le pli du film plastique sur toute la section (X) et en renforçant la section (Y) séparément **caractérisé en ce qu'**un cordon en plastique (5) est collé, soudé ou extrude sur ses deux côtés longitudinaux étant partiellement ou entièrement incline par rapport à l'axe longitudinal principal avec ladite inclinaison étant constant ou changeant de direction et suivant un motif repetitive avec la période Pi et portant des trous (4) aux deux sections (X), adjacents au cordon incliné et aux positions les plus proches du bord mais vers le côté du cordon qui fait face à l'axe longitudinal principal du film plastique, ledit cordon a un diameter (D) inférieur à 10 mm et en raison de l'inclinaison du cordon répartit la charge exercée sur toute la zone renforcée du film plastique dans les deux sens longitudinal et transversal, augmentant ainsi la force du film plastique.

2. Film plastique (1) pour couvrir des cultures linéaires de fruits mous selon la revendication 1 **caractérisé en ce que** le cordon incline a la forme d'une courbe de forme d'onde avec la periode (Pi) et l'amplitude (ai).

3. Film plastique (1) pour couvrir des cultures linéaires de fruits mous selon la revendication 1 et/ou 2 **caractérisé en ce que** sur chaque bord en longueur le film plastique porte plusieurs cordes en plastique (5) collées, soudées ou extrudées et placées sur la même surface ou sur les deux surfaces du film plastique et sont décrits par une courbe de forme d'onde symétrique f(x) = α*sinx et f(x) = -α*sinx.

4. Film plastique (1) pour couvrir des cultures linéaires de fruits mous selon la revendication 1 et/ou 2 ou 3 **caractérisé en ce que** sur chaque bord en longueur le film plastique porte plusieurs cordes en plastique (5) collées, soudées ou extrudées et placées sur la même surface ou sur les deux surfaces du film plastique et qui ont des periods (Pi) et des amplitudes différentes (ai) entre eux.

5. Film plastique (1) pour couvrir des cultures linéaires de fruits mous selon la revendication 1 et/ou 2 et/ou 3 **caractérisé en ce que** la section transversale du cordon plastique (5) utilize peut être de n'importe quelle forme et/ou de géométrie variable sur la longueur du film.

6. Film plastique (1) pour couvrir des cultures linéaires de fruits mous selon la revendication 1 et/ou 2, 3 et 4 **caractérisé en ce que** le cordon plastique (5) ou les cordons sont discontinus par rapport à l'axe longitudinal du film plastique et presentment un motif repetitive.

7. Film plastique (1) pour couvrir des cultures linéaires de fruits mous selon la revendication 1 et/ou les revendications 2, 3, 4 et 5 **caractérisé en ce que** le cordon plastique (5) ou les cordons plastiques (5) sont inclinés par rapport à l'axe principal dans le sens de la longueur du film plastique et forment un motif repetitive avec la période Pi ayant soit la meme inclinaison ou des inclinaisons différentes se croissant ou non formant ainsi une formed zigzag continue ou discontinue.
